# FASCICULE DE BREVET EUROPEEN

(11) **EP 2 834 394 B1**
(45) Date de publication et mention de la délivrance du brevet: **16.03.2016**
(21) Numéro de dépôt: 13713216.3
(22) Date de dépôt: 02.04.2013
(51) Int. Cl.: C25D 3/62, C25D 15/02, C25D 5/20, C25D 3/56, C25D 7/00, C25D 5/38, C25D 15/00, B82Y 30/00, B82Y 99/00

(54) **BAIN GALVANIQUE POUR LE DÉPÔT ÉLECTROLYTIQUE D'UN MATÉRIAU COMPOSITE**
GALVANISCHES BAD FÜR DIE ELEKTROLYTISCHE ABSCHEIDUNG EINES VERBUNDWERKSTOFFES
GALVANIC BATH FOR DEPOSITING ELECTROLYTICALLY A COMPOSITE MATERIAL

(30) Priorité: 02.04.2012 CH 459122012
(43) Date de publication de la demande: 11.02.2015
(73) Titulaire: Haute Ecole Arc, 2000 Neuchatel (CH)
(72) Inventeur: GAY, Pierre-Antoine, F-25130 Villers-Le-Lac (FR)
(74) Mandataire: GLN SA
(86) Numéro de dépôt international: PCT/EP2013/056939
(87) Numéro de publication internationale: WO 2013/150028

(56) Documents cités:
- EP-A1- 0 046 912
- WO-A1-2011/119818
- WO-A2-2008/063148
- US-A1- 2007 199 826

## Description

### Domaine technique

La présente invention concerne des bains galvaniques pour le dépôt électrolytique d'un matériau composite à base d'or, de cuivre et de cadmium, comprenant, sous forme cyanurée, de l'or, du cuivre, et du cadmium. Elle concerne également un procédé de dépôt galvanique d'un matériau composite sur un substrat, ainsi qu'une pièce comprenant un revêtement d'un tel matériau composite.

### Etat de la technique

Des alliages à base d'or, de cuivre et de cadmium, comprenant de préférence plus de 50% d'or, sont utilisées dans de nombreux domaines, notamment dans les domaines de l'horlogerie pour la décoration, la bijouterie, ou l'électronique pour réaliser des contacts.

Ces alliages peuvent être déposés sur un substrat par la voie galvanique au moyen d'un bain galvanique dans lequel est placé le substrat.

Des recherches sont toujours menées pour améliorer les propriétés de ces alliages en fonction de leurs domaines d'utilisation. Notamment, il est nécessaire de réduire le coefficient de frottement afin ou la résistivité, afin d'augmenter la conductibilité électrique de l'alliage.

Une solution pour déposer un revêtement de cuivre par voie galvanique aux propriétés améliorées est par exemple décrite dans les publications WO 2008/063148 ou US 2007/0199826. Ces documents décrivent la préparation d'un bain galvanique à base de cuivre et de nanotubes de carbone monofeuillets, en milieu acide, afin d'obtenir un dépôt d'un matériau composite. Toutefois, ces publications décrivent des bains comprenant de nombreux additifs, qui peuvent générer des réactions parasites nuisant aux propriétés du matériau composite déposé. De plus, si les additifs présents dans le bain se dégradent, le bain ne peut plus fonctionner et doit être remplacé. Par ailleurs, les procédés connus utilisent de nombreux prétraitements du bain, tels que des traitements thermiques, qui sont consommateurs en énergie.

En conséquence, un but de la présente invention est de proposer un bain galvanique permettant d'obtenir un matériau à base d'or, de cuivre et de cadmium aux propriétés améliorées.

Un autre but de la présente invention est de proposer un procédé de dépôt galvanique d'un matériau à base d'or, de cuivre et de cadmium, simple et économique.

### Divulgation de l'invention

A cet effet, et conformément à la présente invention, il est proposé un bain galvanique pour le dépôt électrolytique d'un matériau composite à base d'or, de cuivre et de cadmium, comprenant, sous forme cyanurée, de l'or, du cuivre, et du cadmium.

Selon l'invention, ledit bain galvanique présente un pH supérieur à 7, et comprend en outre des nanotubes de carbone. De plus, il ne contient aucun agent tensio-actif utilisé pour mettre en dispersion les nanotubes de carbone.

La présente invention concerne également un procédé de dépôt galvanique d'un matériau composite sur un substrat comprenant les étapes de:
- préparation d'un bain tel que défini ci-dessus,
- traitement dudit bain par ultrasons,
- électrolyse dans ledit bain comprenant une anode et le substrat formant une cathode,
ledit procédé ne comprenant aucune étape de prétraitement thermique du bain.

La présente invention concerne également une pièce présentant une résistivité électrique inférieure à 10 mΩ, comprenant un revêtement galvanique d'un matériau composite comprenant entre 55% et 80% en poids d'or, entre 10% et 30% en poids de cuivre, entre 5 et 10% en poids de cadmium et entre 0,1% et 5 % en poids de nanotubes de carbone, par rapport au poids total du matériau composite.

Ladite pièce peut comprendre une sous-couche comprenant du nickel et entre 1% à 20% en poids de phosphore, et ayant subi un traitement thermique à une température comprise entre 200°C et 500°C.

### Brève description des dessins

L'invention sera mieux comprise à la lecture de la description qui va suivre, d'un mode de réalisation, donné à titre d'exemple et fait en référence aux dessins dans lesquels:
- les figures 1 et 2 représentent le coefficient de frottement pour un dépôt d'or et de cobalt avec et sans nanotubes de carbone, et pour un dépôt d'or, de cuivre et de cadmium, avec et sans nanotubes de carbone, respectivement, et
- les figures 3 et 4 représentent la résistivité pour un dépôt d'or et de cobalt avec et sans nanotubes de carbone, et pour un dépôt d'or, de cuivre et de cadmium, avec et sans nanotubes de carbone, respectivement.

### Mode(s) de réalisation de l'invention

Il est décrit un bain galvanique pour le dépôt électrolytique d'un matériau composite à base d'or, de cuivre et de cadmium, comprenant, sous forme cyanurée, de l'or, du cuivre, et du cadmium. Conformément à l'invention, ledit bain galvanique comprend en outre des nanotubes de carbone.

De préférence, les nanotubes de carbone sont des nanotubes de carbone multifeuillets. D'une manière avantageuse, ils présentent une longueur comprise entre 0.5 µm et 10 µm, et un diamètre compris entre 5 nm et 20 nm. De préférence, ils présentent une longueur comprise entre 0.5 µm et 10 µm, et un diamètre compris entre7 nm et 15 nm .

De préférence, le bain galvanique selon l'invention contient de 0.5 g/l à 20 g/l d'or métal, et plus préférentiellement de 3,5 g/l à 8 g/l d'or métal, de 6 g/l à 70 g/l de cuivre métal, et plus préférentiellement de 20 g/l à 35 g/l de cuivre métal, de 0,3 g/l à 5 g/l de cadmium métal, et plus préférentiellement de 0,6 g/l à 1,5 g/l de cadmium métal et de 0,5 g/l à 20 g/l de nanotubes de carbone, et plus préférentiellement de 0,5 g/l à 15 g/l de nanotubes de carbone, de manière à obtenir un matériau composite comprenant entre 55% et 80% d'or en poids, entre 10% et 30% de cuivre en poids, entre 5 et 10% de cadmium en poids, et entre 0,1% et 5% de nanotubes de carbone en poids, par rapport au poids total du matériau composite.

De préférence, le matériau composite obtenu comprend entre 55% et 75% d'or en poids, entre 15% et 25% de cuivre en poids, entre 8% et 10% de cadmium en poids, et entre 0,1% et 5% de nanotubes de carbone en poids, par rapport au poids total du matériau composite.

D'une manière particulièrement avantageuse, les espèces métalliques sont utilisées sous forme cyanurée, de sorte que, conformément à l'invention, ledit bain galvanique présente un pH supérieur à 7. De préférence, le pH du bain galvanique selon l'invention est supérieur à 9, et plus préférentiellement est compris entre 9 et 11, et plus préférentiellement encore compris entre 9,5 et 10,5, avec de préférence une densité de courant de 0.6 A.dm² à 1.5 A.dm² et à la température de 45°C à 75°C, préférentiellement entre 60°C et 65°C.

Le bain galvanique selon l'invention peut comprendre en outre de 3 g/l à 50 g/l de cyanure de potassium libre, et de préférence de 20 g/l à 30 g/l de cyanure de potassium libre, de sorte que la quantité totale de cyanure est comprise entre 1 à 200 g/l.

Le bain galvanique peut également comprendre un agent complexant organique, de type hydroxy-alkyl-amino-dicarboxylique de formule générale 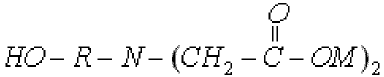 où R représente un groupe alkylène de 1 à 4 atomes de carbone et M représente des ions choisis parmi le groupe comprenant les ions sodium, potassium et ammonium, dans une quantité comprise entre 5 g/l et 100 g/l.

Le bain galvanique peut également comprendre un agent mouillant, tel que les amido-propyl-diméthyl-aminoxydes d'acides gras selon la formule générale suivante 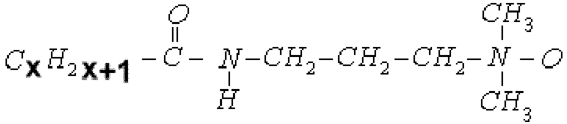 où X représente un nombre compris entre 11 et 17 dans une quantité comprise entre 0,01 ml/l et 50 ml/l.

Le bain galvanique peut également comprendre un brillanteur inorganique sous forme de sels solubles ou complexes de sélénium, tellure, vanadium, arsenic, ou leur mélange, dans une quantité comprise entre 0,01 mg/l et 100 mg/l.

Le bain galvanique peut également comprendre un dépolarisant, tel que du thiosulfate de sodium ou des dérivés d'acides thioalcane sulfoniques ou thiocarboxyliques, tel que par exemple l'acide mercaptosuccinique, dans une quantité comprise entre 2 mg/l et 20 mg/l.

Le bain galvanique obtenu présente de préférence une densité en degrés Baumé comprise entre 12°Bé et 32°Bé, et de préférence comprise entre 12°Bé et 20°Bé.

Ainsi, un bain galvanique selon l'invention peut contenir :
- de 1 g/l à 20 g/l d'or sous forme de complexe cyanuré,
- de 6 g/l à 70 g/l de cuivre sous forme de complexe cyanuré
- de 0.3 g/l à 5 g/l de cadmium sous forme de complexe cyanuré ou organique,
- de 0.5 g/l à 15 g/l de nanotubes de carbone,
- de 3 g/l à 50 g/l de cyanure de potassium libre
- de 1 g/l à 200 g/l de cyanure total,
- de 5 g/l à 100 g/l de complexant organique,
- de 0.01 ml/l à 50 ml/l de mouillant,
   ainsi qu'optionnellement
- de 0,01 mg/l à 100 mg/l de brillanteur
- de 2 mg/l à 20 mg/l de dépolarisant.

Conformément à l'invention, ledit bain galvanique ne contient aucun agent tensio-actif utilisé pour mettre en dispersion les nanotubes de carbone. Ainsi, il n'y a pas de risque à ce que de tels agents se dégradent et nuisent à la qualité du bain.

Le bain galvanique selon l'invention est mis en oeuvre dans un procédé de dépôt galvanique d'un matériau composite sur un substrat comprenant les étapes de :
- préparation d'un bain tel que décrit ci-dessus,
- traitement dudit bain par ultrasons,
- électrolyse dans ledit bain comprenant une anode et le substrat formant une cathode,
ledit procédé ne comprenant aucune étape de prétraitement thermique du bain ou des nanotubes de carbone.

Le procédé selon l'invention ne comprend également aucun prétraitement acide des nanotubes de carbone.

Le procédé selon l'invention ne comprend également aucune étape d'addition d'agent tensio-actif utilisé pour mettre en dispersion les nanotubes de carbone.

Le traitement du bain par ultrasons est réalisé pendant une durée comprise entre 2 et 24 heures.

Au cours de l'électrolyse, le bain est soumis classiquement à une agitation mécanique, à une température comprise entre 45°C et 75°C. La densité de courant est de préférence comprise entre 0,6 A.dm² et 2 A.dm², et plus préférentiellement entre 0,6 A.dm² et 1,5 A.dm².

L'anode est de préférence une anode en titane platinée ou toute autre anode approprié.

La cathode est formée par le substrat sur lequel le matériau composite doit être déposé. Ce substrat peut être un métal ou tout substrat approprié, et peut avoir subi différents traitements de surface appropriés.

D'une manière avantageuse, il est possible de déposer le matériau composite or/cuivre/cadmium/nanotubes de carbone sur une sous-couche à base de nickel et de phosphore, contenant de 1 à 20% en poids de phosphore, et de préférence de 10 à 15% en poids de phosphore. La sous-couche a également subi un traitement thermique à une température comprise entre 200°C et 500°C pendant une heure, et de préférence entre 250°C et 300°C. Une telle combinaison permet d'obtenir des pièces comprenant un revêtement galvanique d'un matériau composite or/cuivre/cadmium/nanotubes de carbone présentant des coefficients de frottement faible (inférieur à 0.2 µm) et présentant une résistance à l'usure améliorée (+200%).

L'épaisseur du matériau composite déposé est de préférence comprise entre 100 nm et 10 µm, et plus préférentiellement entre 0,5 µm et 10 µm.

Le procédé selon l'invention permet d'obtenir une pièce présentant une résistivité électrique inférieure à 10 mΩ, comprenant un revêtement galvanique d'un matériau composite comprenant entre 55% et 80% en poids d'or, entre 10% et 30% en poids de cuivre, entre 5 et 10% en poids de cadmium et entre 0,1% et 5 % en poids de nanotubes de carbone, par rapport au poids total du matériau composite. D'une manière avantageuse, une pièce selon l'invention présente une résistivité électrique inférieure à 5 mΩ.

Cette pièce peut être utilisée par exemple dans les domaines de l'horlogerie pour la décoration, la bijouterie, ou l'électronique pour réaliser des contacts électriques. Plus particulièrement, l'invention peut s'appliquer aux pièces horlogères internes au mouvement, aux roues horlogères, aux platines, pièces externes, pistes de contact électrique, fiches, circuits intégrés, prises et autres circuits électriques/électroniques permettant le passage d'un courant électrique.

Les exemples suivants illustrent la présente invention sans toutefois en limiter la portée.

### Exemples

Un bain selon l'invention a été préparé selon la composition suivante :

| | |
|---|---|
| Or, sous forme de complexe cyanuré | 4 g/l |
| Cuivre sous forme de complexe cyanuré | 60 g/l |
| Cadmium sous forme de cyanure | 0.6 g/l |
| Cyanure de potassium libre | 25 g/l |
| Sel de potassium de l'acide hydroxy-éthyl-imino-diacetique | 20 g/l |
| Mouillant amido-propyl-diméthyl-aminoxides d'acide gras saturés (11 à 17 carbone) | 5 ml/l |
| Carbonate de potassium | 20 g/l |
| Nanotubes de carbone | 2 g/l |
| pH = 10.5 | |

Au cours de l'électrolyse, le bain est soumis classiquement à une agitation mécanique, à une température de 65°C, avec une densité de courant de 0,8 A.dm².

Le temps d'imposition est de 4 minutes.

A titre comparatif, un bain à base d'or et de cobalt a été préparé selon la composition suivante :

| | |
|---|---|
| Or, sous forme de complexe cyanuré | 4 g/l |
| Cobalt sous forme de citrate | 1.5 g/l |
| Citrate monosodique | 150 g/l |
| Nanotubes de carbone | 2g/l |
| Mouillant fluoré | 5mL/L |
| pH = 10.5 | |

Au cours de l'électrolyse, le bain est soumis classiquement à une agitation mécanique, à une température de 35°C, avec une densité de courant de 0,8 A.dm².

Le temps d'imposition est de 4 minutes.

Des plaques de laiton de 5 cm² ont été soumises à l'électrolyse dans ces bains.

Les plaques en laiton peuvent être déjà revêtues d'un revêtement de nickel. Ce prétraitement permet de protéger l'électrolyte lors de l'introduction des pièces (dissolution du cuivre et du nickel). Ce traitement peut également durcir le substrat proposé. Toutefois, ce prétraitement est facultatif.

Les matériaux composites déposés pour une densité de courant de 0.8A.dm² pendant 4 minutes à 65°C ont la composition suivante :

| | |
|---|---|
| Or | 58% |
| Cuivre | 33% |
| Cadmium | 8% |
| Nanotubes | 1.9% |

Des tests de frottement sont réalisés au moyen d'un tribomètre.

Le tribomètre calcule le coefficient de frottement µ grâce à la force tangentielle mesurée, comme étant défini par le rapport entre la force tangentielle et la force normale, pour une masse appliquée sur les dépôts de 5N.

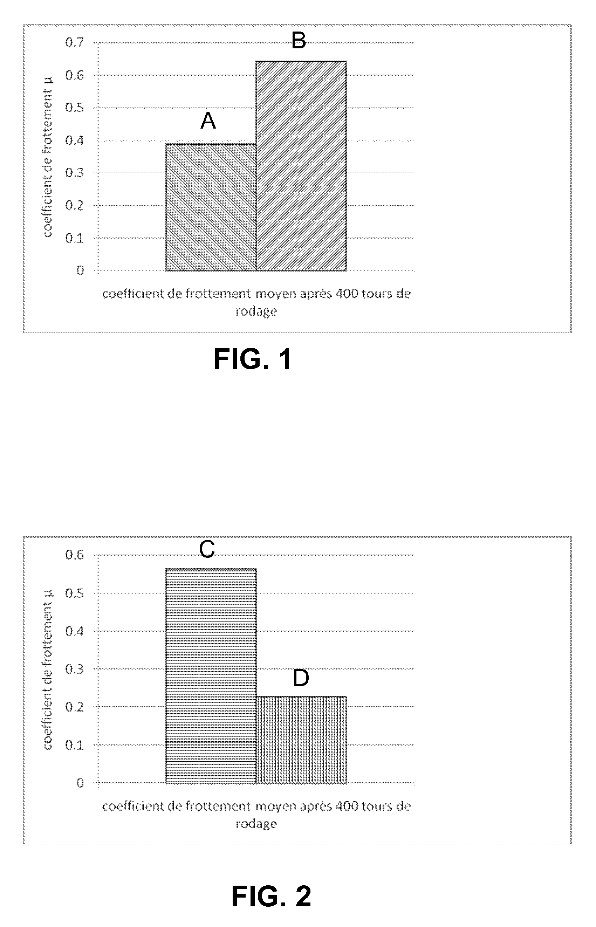

Les résultats sont représentés sur les figures 1 et 2, le coefficient de frottement étant mesuré après 400 tours de rodage.

Le graphe A de la figure 1 correspond à l'alliage or/cobalt et le graphe B de la figure 1 correspond au matériau composite or/cobalt/nanotube de carbone multifeuilllets.

Le graphe C de la figure 2 correspond à l'alliage or/cuivre/cadmium et le graphe D de la figure 2 correspond au matériau composite or/cuivre/cadmium/nanotube de carbone multifeuilllets.

Les figures 1 et 2 montrent que, d'une manière surprenante et inattendue, l'utilisation de nanotubes de carbone multifeuillets dans un revêtement or/cuivre/cadmium permet de réduire le coefficient de frottement alors que ce coefficient est augmenté dans le cas d'un matériau or-cobalt.

Un autre essai a été réalisé en prévoyant, sous la couche du matériau composite or/cuivre/cadmium/nanotube de carbone multifeuilllets, une sous-couche à base de nickel et de phosphore (12% en poids) ayant subi un traitement thermique entre 250°C et 300°C pendant une heure. Le coefficient de frottement du revêtement en matériau composite or/cuivre/cadmium/nanotubes de carbone multifeuilllets est encore abaissé à 0.15 µm.

Un matériau qui présente un coefficient de frottement plus faible traduit en règle générale une meilleure aptitude à la lubrification lors de sollicitations en frottement. Lors de l'utilisation de ce genre de matériau, ceci se traduit par un abaissement significatif de l'énergie nécessaire/ dépensée lors de l'utilisation du système.

Des mesures de résistance à l'usure ont également été effectuées, sur une distance totale de glissement de 314 m, en mesurant le sillon d'usure formé lors du test de frottement. Pour un revêtement en alliage or/cuivre/cadmium d'une épaisseur de 6 µm, la profondeur du sillon d'usure mesurée est de 3 µm. Pour un revêtement en alliage or/cuivre/cadmium/nanotubes de carbone multifeuilllets d'une épaisseur de 2 µm, la profondeur du sillon d'usure mesurée est de 1 µm. Pour un revêtement en alliage or/cuivre/cadmium/nanotubes de carbone multifeuilllets d'une épaisseur de 2 µm déposé sur une sous-couche de nickel et de phosphore (12% en poids) ayant subi un traitement thermique entre 250°C et 300°C pendant une heure, la profondeur du sillon d'usure mesurée est de 0.

Des mesures de tribo-résistivité ont également été effectuées au moyen d'un tribomètre.

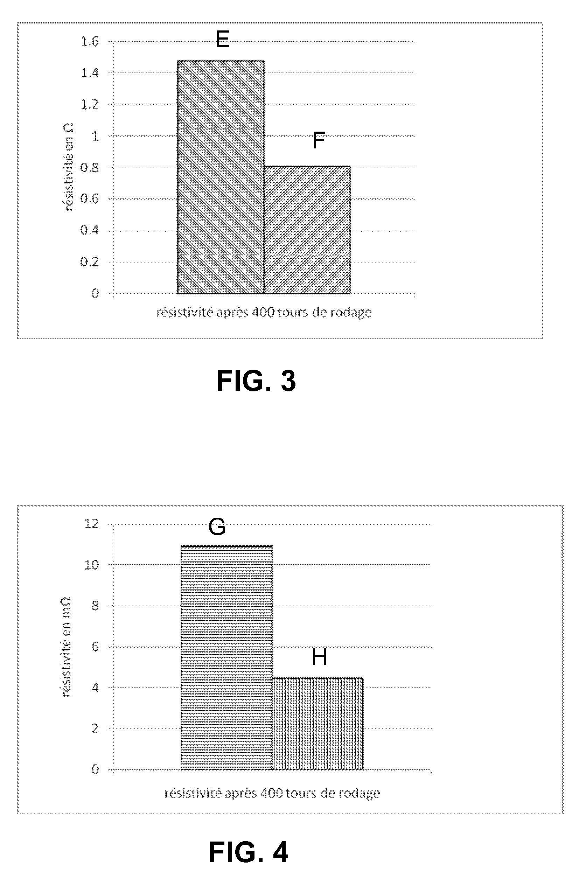

Les résultats sont représentés sur les figures 3 et 4, la résistivité étant mesurée après 400 tours de rodage.

Le graphe E de la figure 3 correspond à l'alliage or/cobalt et le graphe F de la figure 3 correspond au matériau composite or/cobalt/nanotube de carbone multifeuilllets.

Le graphe G de la figure 4 correspond à l'alliage or/cuivre/cadmium et le graphe H de la figure 4 correspond au matériau composite or/cuivre/cadmium/nanotube de carbone multifeuilllets.

La résistivité est de quasi 4 mΩ avec le matériau composite obtenu selon l'invention, alors qu'elle est de 800 mΩ pour le matériau à base d'or et de cobalt.

Cet effet est d'autant plus inattendu que la demande WO 2008/063148 décrit que les nanotubes de carbone multifeuillets dans les alliages de cuivre présentent une faible conductivité électrique.

Les bains galvaniques selon l'invention permettent d'obtenir des pièces aux propriétés améliorées. Notamment, la résistivité est réduite et est de préférence inférieure à 5 mΩ, et le coefficient de frottement est réduit.

## Revendications

1. Bain galvanique pour le dépôt électrolytique d'un matériau composite à base d'or, de cuivre et de cadmium, comprenant, sous forme cyanurée, de l'or, du cuivre, et du cadmium, **caractérisé en ce qu'**il présente un pH supérieur à 7, **en ce qu'**il comprend en outre des nanotubes de carbone, et **en ce qu'**il ne contient aucun agent tensio-actif utilisé pour mettre en dispersion les nanotubes de carbone.

2. Bain galvanique selon la revendication 1, **caractérisé en ce que** les nanotubes de carbone sont des nanotubes de carbone multifeuillets.

3. Bain galvanique selon l'une quelconque des revendications précédentes, **caractérisé en ce qu'**il contient de 0.5 g/l à 20 g/l d'or métal, de 6 g/l à 70 g/l de cuivre métal, de 0,3 g/l à 5 g/l de cadmium métal, et de 0,5 g/l à 20 g/l de nanotubes de carbone, de manière à obtenir un matériau composite comprenant entre 55% et 80% d'or en poids, entre 10% et 30% de cuivre en poids, entre 5 et 10% de cadmium en poids et entre 0,1% et 5% de nanotubes de carbone en poids, par rapport au poids total du matériau composite.

4. Bain galvanique selon l'une quelconque des revendications précédentes, **caractérisé en ce qu'**il comprend en outre de 3 g/l à 50 g/l de cyanure de potassium libre.

5. Bain galvanique selon l'une quelconque des revendications précédentes, **caractérisé en ce que** le pH est compris entre 9 et 11.

6. Bain galvanique selon l'une quelconque des revendications précédentes, **caractérisé en ce que** les nanotubes de carbone présentent une longueur comprise entre 0.5 µm et 10 µm, et un diamètre compris entre 5 nm et 20 nm.

7. Procédé de dépôt galvanique d'un matériau composite sur un substrat comprenant les étapes de :
- préparation d'un bain selon l'une quelconque des revendications 1 à 6
- traitement dudit bain par ultrasons,
- électrolyse dans ledit bain comprenant une anode et le substrat formant une cathode,
ledit procédé ne comprenant aucune étape de prétraitement thermique du bain.

8. Pièce présentant une résistivité électrique inférieure à 10 mΩ, comprenant un revêtement galvanique d'un matériau composite comprenant entre 55% et 80% en poids d'or, entre 10% et 30% en poids de cuivre, entre 5 et 10% en poids de cadmium et entre 0,1% et 5 % en poids de nanotubes de carbone, par rapport au poids total du matériau composite.

9. Pièce selon la revendication 8, **caractérisée en ce qu'**elle comprend une sous-couche comprenant du nickel et entre 1% à 20% en poids de phosphore, et ayant subi un traitement thermique à une température comprise entre 200°C et 500°C.

10. Pièce selon la revendication 8 ou 9, susceptible d'être obtenue par le procédé selon la revendication 7.

## Patentansprüche

1. Galvanisches Bad zur elektrolytischen Ablage eines Verbundmaterials auf der Grundlage von Gold, Kupfer und Cadmium, umfassend, in Form Cyanid, Gold, Kupfer und Cadmium, **dadurch gekennzeichnet, dass** es einen pH-Wert von mehr als 7 aufweist, dadurch, dass es außerdem Kohlenstoffnanoröhrchen umfasst, und dadurch, dass es kein oberflächenaktives Mittel umfasst, das verwendet wird, um die Kohlenstoffnanoröhrchen zu dispergieren.

2. Galvanisches Bad nach Anspruch 1, **dadurch gekennzeichnet, dass** die Kohlenstoffnanoröhrchen mehrwandige Kohlenstoffnanoröhrchen sind.

3. Galvanisches Bad nach einem der vorhergehenden Ansprüche, **dadurch gekennzeichnet, dass** es von 0,5 g/l bis 20 g/l Metallgold, von 6 g/l bis 70 g/l de Metallkupfer, von 0,3 g/l bis 5 g/l Metallkadmium und von 0,5 g/l bis 20 g/l Kohlenstoffnanoröhrchen umfasst, um ein Verbundmaterial zu erhalten, das zwischen 55 Gew.% und 80 Gew.% Gold, zwischen 10 Gew.% und 30 Gew.% Kupfer, zwischen 5 Gew.% und 10 Gew.% Kadmium und zwischen 0,1 Gew.% und 5 Gew.% Kohlenstoffnanoröhrchen mit Bezug auf das Gesamtgewicht des Verbundmaterials umfasst.

4. Galvanisches Bad nach einem der vorhergehenden Ansprüche, **dadurch gekennzeichnet, dass** es außerdem von 3 g/l bis 50 g/l freies Kaliumcyanid umfasst.

5. Galvanisches Bad nach einem der vorhergehenden Ansprüche, **dadurch gekennzeichnet, dass** der pH-Wert zwischen 9 und 11 liegt.

6. Galvanisches Bad nach einem der vorhergehenden Ansprüche, **dadurch gekennzeichnet, dass** die Kohlenstoffnanoröhrchen eine Länge aufweisen, die zwischen 0,5 µm und 10 µm liegt, und einen Durchmesser, der zwischen 5 nm und 20 nm liegt.

7. Verfahren zur galvanischen Ablage eines Verbundmaterials auf einem Substrat, umfassend die Folgenden Schritte:
- Herstellen eines Bads nach einem der Ansprüche 1 bis 6,
- Behandeln des Bads durch Ultraschall,
- Elektrolyse in dem Bad, umfassend eine Anode und das Substrat, das eine Kathode bildet,
wobei das Verfahren keinen Schritt der thermischen Vorbehandlung des Bads umfasst.

8. Werkstück, das einen elektrischen Widerstand von weniger als 10 mΩ aufweist, umfassend eine galvanische Beschichtung eines Verbundmaterials, das zwischen 55 Gew.% und 80 Gew.% Gold, zwischen 10 Gew.% und 30 Gew.% Kupfer, zwischen 5 Gew.% und 10 Gew.% Kadmium und zwischen 0,1 Gew.% und 5 Gew.% Kohlenstoffnanoröhrchen mit Bezug auf das Gesamtgewicht des Verbundmaterials umfasst.

9. Werkstück nach Anspruch 8, **dadurch gekennzeichnet, dass** es eine untere Schicht umfasst, umfassend Nickel und zwischen 1 Gew.% bis 20 Gew.% Phosphor und einer thermischen Behandlung bei einer Temperatur unterzogen wurde, die zwischen 200 °C und 500 °C liegt.

10. Werkstück nach Anspruch 8 oder 9, das durch das Verfahren nach Anspruch 7 erhalten werden kann.

## Claims

1. An electroplating bath for electrolytic deposition of a composite material based on gold, copper and cadmium, comprising as cyanides, gold, copper and cadmium, **characterized in that** it has a pH of more than 7, **in that** it further contains carbon nanotubes, and **in that** it does not contain any surfactant used for dispersing carbon nanotubes.

2. The electroplating bath according to claim 1, **characterized in that** the carbon nanotubes are multilayer carbon nanotubes.

3. The electroplating bath according to any of the preceding claims, **characterized in that** it contains from 0.5 g/L to 20 g/L of gold metal, from 6 g/L to 70 g/L of copper metal, from 0.3 g/L to 5 g/L of cadmium metal, and from 0.5 g/L to 20 g/L of carbon nanotubes, so as to obtain a composite material comprising between 55% and 80% by weight of gold, between 10% and 30% by weight of copper, between 5% and 10% by weight of cadmium and between 0.1% and 5% by weight of carbon nanotubes, based on the total weight of the composite material.

4. The electroplating bath according to any of the preceding claims, **characterized in that** it further contains 3 g/L to 50 g/L of free potassium cyanide.

5. The electroplating bath according to any of the preceding claims, **characterized in that** the pH is comprised between 9 and 11.

6. The electroplating bath according to any of the preceding claims, **characterized in that** the carbon nanotubes have a length comprised between 0.5 µm and 10 µm, and a diameter comprised between 5 nm and 20 nm.

7. A method for depositing by electroplating a composite material on a substrate, comprising the steps:
- preparation of a bath according to any of claims 1 to 6
- treatment of said bath with ultrasonic waves,
- electrolysis in said bath comprising an anode and the substrate forming a cathode,
said method not comprising any step for thermal pretreatment of the bath.

8. A part having an electric resistivity of less than 10 mΩ, comprising a galvanic coating of a composite material comprising between 55% and 80% by weight of gold, between 10% and 30% by weight of copper, between 5% and 10% by weight of cadmium and between 0.1% and 5% by weight of carbon nanotubes, based on the total weight of the composite material.

9. The part according to claim 8, **characterized in that** it comprises a sub-layer comprising nickel and between 1% and 20% by weight of phosphorus, and having undergone a heat treatment a temperature comprised between 200°C and 500°C.

10. The part according to claim 8 or 9, which may be obtained with the method according to claim 7.
